# EUROPEAN PATENT APPLICATION

(11) **EP 4 783 311 A1**
(43) Date of publication of application: **29.07.2026**
(21) Application number: 25187173.7
(22) Date of filing: 03.07.2025
(51) Int. Cl.: H01M 50/15, H01M 50/176, H01M 50/188, H01M 50/209, H01M 50/55, H01M 50/553, H01M 50/566

(54) **SECONDARY BATTERY, BATTERY MODULE INCLUDING THE SAME, AND METHOD OF MANUFACTURING THE SAME**

(30) Priority: 24.01.2025 KR 20250011131
(71) Applicant: SAMSUNG SDI CO., LTD., Yongin-si, Gyeonggi-do 17084 (KR)
(72) Inventor: YOO, Seung Yeol, 16678 Suwon-si, Gyeonggi-do (KR); KIM, Heon Hee, 16678 Suwon-si, Gyeonggi-do (KR); KIM, Bo Hun, 16678 Suwon-si, Gyeonggi-do (KR); KIM, Hyeok Joo, 16678 Suwon-si, Gyeonggi-do (KR)
(74) Representative: Gulde & Partner

(57) **Abstract**

A secondary battery, a battery module including the same, and a method of manufacturing the same are disclosed. A secondary battery includes a case including an opening portion, an electrode assembly accommodated in the case and including a first tab member and a second tab member, a cap plate including a cap plate body located in the opening portion, and a cap plate terminal hole passing through the cap plate body, a terminal part including a first terminal electrically connected to the first tab member, and a second terminal electrically connected to the second tab member, and passing through the cap plate terminal hole, a first insulating part in contact with the terminal part to support the terminal part, and a second insulating part on the cap plate to support the first insulating part.

## Description

### BACKGROUND

### 1. Field

Aspects of embodiments of the present disclosure relate to a secondary battery, a battery module including the same, and a method of manufacturing the same.

### 2. Description of the Related Art

Generally, with the recent rapid proliferation of electronic devices using batteries, such as mobile phones, laptop computers, and electric vehicles, a demand for secondary batteries with high energy density and high capacity has been rapidly increasing. Accordingly, research and development for improving the performance of lithium secondary batteries are actively being conducted.

A lithium secondary battery is a battery including a positive electrode and a negative electrode including an active material capable of lithium ion intercalation and deintercalation, and an electrolyte, and produces electric energy through oxidation and reduction reactions when lithium ions are intercalated or deintercalated from the positive electrode and the negative electrode.

The above information disclosed in this Background section is provided for enhancement of understanding of the background of the present disclosure, and, therefore, may contain information that does not constitute related (or prior) art.

### SUMMARY

According to an aspect of embodiments of the present invention, a secondary battery having improved welding strength of a terminal part, a battery module including the same, and a method of manufacturing the same are provided.

According to another aspect of embodiments of the present invention, a secondary battery having improved structural strength and waterproof performance, a battery module including the same, and a method of manufacturing the same are provided.

The above and other aspects and features of the present disclosure will be described in or will be apparent from the following description of some embodiments of the present disclosure.

According to one or more embodiments, a secondary battery includes a case including an opening portion, an electrode assembly accommodated in the case and including a first tab member and a second tab member, a cap plate including a cap plate body located in the opening portion, and a cap plate terminal hole passing through the cap plate body, a terminal part including a first terminal electrically connected to the first tab member and a second terminal electrically connected to the second tab member, and passing through the cap plate terminal hole, a first insulating part in contact with the terminal part to support the terminal part, and a second insulating part on the cap plate to support the first insulating part.

The first insulating part may be between the terminal part and the second insulating part, and the second insulating part may be between the first insulating part and the cap plate.

The first insulating part and the second insulating part may be welded to each other.

The first insulating part and the second insulating part may be laser welded to each other.

The second insulating part may be configured to transmit the laser, and the first insulating part may be configured to absorb the laser to be welded to the second insulating part.

The first insulating part may be inserted in the terminal part, and the second insulating part may be inserted in the cap plate body.

The second insulating part may pass through the cap plate terminal hole to be in contact with a cap plate body outer surface, a cap plate body terminal surface, and a cap plate body inner surface.

The second insulating part may be inserted in the cap plate body inner surface.

The first insulating part may pass through the terminal part.

The first insulating part may pass through a side portion of the terminal part.

The first insulating part may pass through a lower portion of the terminal part.

The first insulating part may be in contact with the lower portion of the terminal part to support the lower portion of the terminal part.

The first insulating part may be waterproof-bonded to a surface of the terminal part.

According to one or more embodiments, a method of manufacturing a secondary battery includes coupling a first insulating part to an outer side of a terminal part, coupling the first insulating part to a second insulating part coupled to a cap plate; and coupling a case to the cap plate.

According to one or more embodiments, a battery module includes a housing, a plurality of secondary batteries accommodated in the housing, and a plurality of bus bars, each electrically connecting a pair of adjacent secondary batteries, wherein the secondary battery includes a case having an opening portion, an electrode assembly accommodated in the case and including a first tab member and a second tab member, a cap plate including a cap plate body located in the opening portion, and a cap plate terminal hole passing through the cap plate body, a terminal part including a first terminal electrically connected to the first tab member, and a second terminal electrically connected to the second tab member, the terminal part being passing through the cap plate terminal hole, a first insulating part in contact with the terminal part to support the terminal part, and a second insulating part on the cap plate to support the first insulating part.

The first insulating part may be between the terminal part and the second insulating part, and the second insulating part may be between the first insulating part and the cap plate.

The first insulating part and the second insulating part may be welded to each other.

The first insulating part and the second insulating part may be laser welded to each other.

The second insulating part may be configured to transmit a laser, and the first insulating part may be configured to absorb the laser to be welded with the second insulating part.

The first insulating part may be inserted in the terminal part, and the second insulating part may be inserted in the cap plate body.

### BRIEF DESCRIPTION OF THE DRAWINGS

The drawings provided with this specification illustrate some embodiments of the present disclosure, and further describe aspects and features of the present disclosure together with the detailed description of the present disclosure. However, the present disclosure is not to be construed as being limited to the drawings:
FIG. 1 is a perspective view schematically illustrating a configuration of a battery module according to an embodiment of the present invention;
FIG. 2 is a perspective view schematically illustrating a configuration of a secondary battery according to an embodiment of the present invention;
FIG. 3 is an exploded perspective view schematically illustrating the configuration of the secondary battery of FIG. 2;
FIG. 4 is an exploded perspective view schematically illustrating a configuration of an electrode assembly according to an embodiment of the present invention;
FIG. 5 is a cross-sectional perspective view of a cap plate and a terminal part according to an embodiment of the present invention;
FIG. 6 is a cross-sectional view of the cap plate and the terminal part according to an embodiment of the present invention;
FIG. 7 is a cross-sectional view of the terminal part, a first insulating part, and a second insulating part according to an embodiment of the present invention;
FIGS. 8 to 10 are cross-sectional views illustrating a process of coupling the first insulating part and the second insulating part of FIG. 7;
FIG. 11 is a cross-sectional view of the terminal part, the first insulating part, and the second insulating part according to another embodiment of the present invention;
FIG. 12 is a cross-sectional view of the terminal part, the first insulating part, and the second insulating part according to another embodiment of the present invention;
FIG. 13 is a cross-sectional view of the terminal part, the first insulating part, and the second insulating part of FIG. 12;
FIG. 14 is a cross-sectional view of the terminal part, the first insulating part, and the second insulating part according to another embodiment of the present invention;
FIG. 15 is a cross-sectional view of the terminal part, the first insulating part, and the second insulating part according to another embodiment of the present invention;
FIG. 16 is a cross-sectional view of the terminal part, the first insulating part, and the second insulating part according to another embodiment of the present invention;
FIG. 17 is a cross-sectional view of the terminal part, the first insulating part, and the second insulating part according to another embodiment of the present invention;
FIG. 18 is a cross-sectional view of the terminal part, the first insulating part, and the second insulating part according to another embodiment of the present invention;
FIG. 19 is a cross-sectional view of the terminal part, the first insulating part, and the second insulating part according to another embodiment of the present invention;
FIG. 20 is a cross-sectional view of a coupling structure of the first insulating part and the second insulating part according to an embodiment of the present invention;
FIG. 21 is a cross-sectional view of a coupling structure of the first insulating part and the second insulating part according to another embodiment of the present invention;
FIG. 22 is a cross-sectional view of a coupling structure of the first insulating part and the second insulating part according to another embodiment of the present invention;
FIG. 23 is a cross-sectional view of a coupling structure of the first insulating part and the second insulating part according to another embodiment of the present invention;
FIGS. 24 to 26 are perspective views illustrating a process of coupling the terminal part to the first insulating part according to an embodiment of the present invention;
FIG. 27 is a flowchart of a method of manufacturing a secondary battery according to an embodiment of the present invention; and
FIGS. 28 to 30 are perspective views illustrating a secondary battery manufacturing process according to an embodiment of the present invention.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

An X-axis, a Y-axis, and a Z-axis described hereinafter may be axes orthogonal to each other.

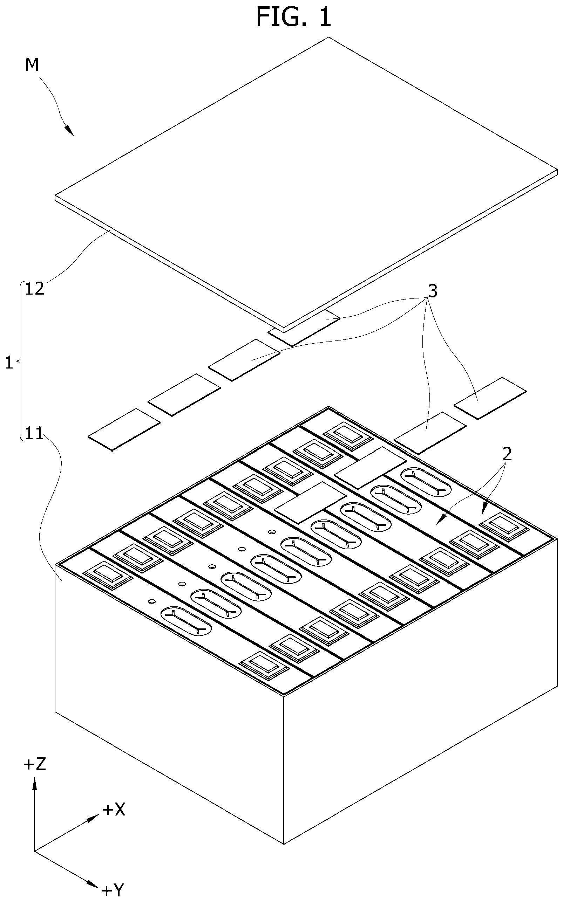

FIG. 1 is a perspective view schematically illustrating a configuration of a battery module according to an embodiment of the present invention.

Referring to FIG. 1, a battery module M according to the present embodiment may include a housing 1, a secondary battery 2, and a bus bar 3.

The housing 1 may form a general exterior of the battery module and provide a space in which the secondary battery 2 can be accommodated.

The housing 1 according to an embodiment may include a housing body 11 and a housing cover 12.

The housing body 11 may be formed to have a shape of a box with a hollow interior and an open side. However, a cross-sectional shape of the housing body 11 is not limited to the quadrilateral illustrated in FIG. 1 and may have any of various shapes, such as a polygon, a circle, and an oval.

The housing cover 12 may be coupled to the housing body 11 to close an internal space of the housing body 11. For example, the housing cover 12 may be formed to have a generally plate-like shape and disposed to face the open side of the housing body 11. The housing cover 12 may be fixed to the housing body 11 by using any of various types of coupling schemes, such as bolting, latching, welding, and fitting.

The secondary battery 2 may function as a unit structure that stores and supplies power in the battery module M. The secondary battery 2 may be disposed inside the housing 1.

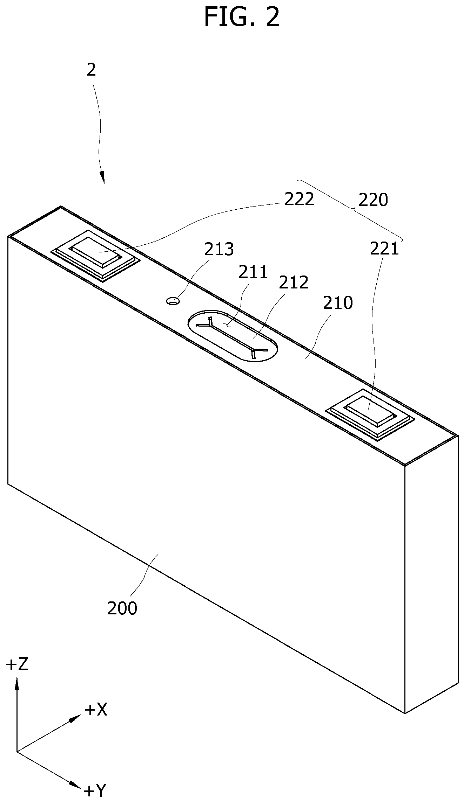

The bus bar 3 may electrically connect a plurality of secondary batteries 2. For example, the bus bar 3 may connect the first terminal (for example, a first terminal 221 in FIG. 2) of one of a pair of secondary batteries 2 adjacent in a first direction (for example, an X-axis direction) and a second terminal (for example, a second terminal 222 in FIG. 2) of the other of the pair of secondary batteries 2. A plurality of bus bars 3 may be provided. Each bus bar 3 may individually connect a pair of secondary batteries 2 adjacent in the first direction. The bus bar 3 may be formed of a conductive material, such as copper, nickel, or aluminum.

A length direction of the bus bar 3 may be parallel to the first direction, and a width direction of the bus bar 3 may be parallel to a second direction (for example, a Y-axis direction).

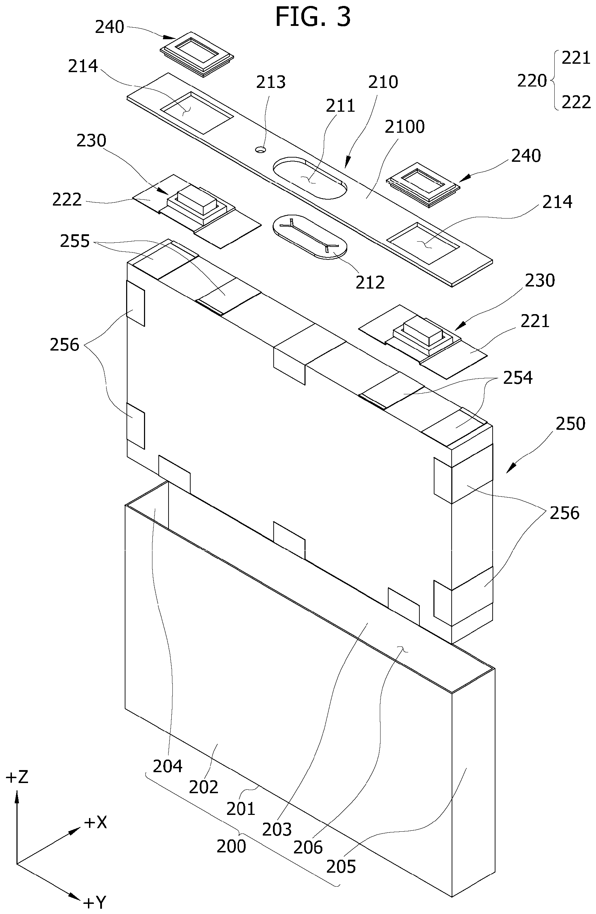

FIG. 2 is a perspective view schematically illustrating a configuration of a secondary battery according to the embodiment of the present invention; and FIG. 3 is an exploded perspective view schematically illustrating the configuration of the secondary battery of FIG. 2.

Herein, an example in which the secondary battery is a prismatic lithium ion secondary battery will be described. However, the present invention is not limited thereto, and the secondary battery may be a lithium polymer battery or a cylindrical battery, for example.

Referring to FIGS. 2 and 3, the secondary battery 2 according to an embodiment includes a case 200, a cap plate 210, a terminal part 220, a first insulating part 230, a second insulating part 240, and an electrode assembly 250.

The case 200 may form a schematic exterior of the secondary battery 2 and accommodate the electrode assembly 250.

The case 200 according to an embodiment may include a bottom portion 201, a front surface portion 202, a rear surface portion 203, a first side surface portion 204, a second side surface portion 205, and an opening portion 206.

The bottom portion 201 may form a lower exterior of the case 200 (in a Z-axis direction in FIG. 3). The bottom portion 201 according to an embodiment may have a shape of a rectangular plate. The bottom portion 201 may be disposed on a bottom surface of the housing body 11.

The front surface portion 202, the rear surface portion 203, the first side surface portion 204, and the second side surface portion 205 may form the exterior of a circumferential surface of the case 200.

The front surface portion 202, the rear surface portion 203, the first side surface portion 204, and the second side surface portion 205 according to an embodiment may have a shape of a plate extending upward (in the +Z-axis direction in FIG. 3) from an edge of the bottom portion 201. The front surface portion 202, the rear surface portion 203, the first side surface portion 204, and the second side surface portion 205 may be disposed to surround a space on the bottom portion 201. In an embodiment, the front surface portion 202, the rear surface portion 203, the first side surface portion 204, and the second side surface portion 205 may be disposed to form a rectangular cross-sectional shape.

The front surface portion 202 and the rear surface portion 203 may be disposed to face each other in the first direction (for example, the X-axis direction). The front surface portion 202 and the rear surface portion 203 may be disposed parallel to each other. An area of the front surface portion 202 may be the same as an area of the rear surface portion 203.

The first side surface portion 204 and the second side surface portion 205 may be disposed to face each other in the second direction (for example, the Y-axis direction). The first side surface portion 204 and the second side surface portion 205 may be disposed parallel to each other. An area of the first side surface portion 204 may be the same as an area of the second side surface portion 205. The area of the first side surface portion 204 and the area of the second side surface portion 205 may be smaller than the area of the front surface portion 202 and the area of the rear surface portion 203.

The case 200 may further include the opening portion 206. The opening portion 206 according to an embodiment may be a space surrounded by upper end portions (for example, in the +Z-axis direction) of the front surface portion 202, the rear surface portion 203, the first side surface portion 204, and the second side surface portion 205. The opening portion 206 may connect an internal space and an external space of the case 200.

Accordingly, the case 200 according to an embodiment may be provided as a hexahedron with an open upper side (for example, in the +Z-axis direction). According to an embodiment, the case 200 may be provided as a cube with an open upper side (for example, in the +Z-axis direction).

The cap plate 210 may be coupled to the case 200 to seal the case 200.

The cap plate 210 according to an embodiment may be formed to have a flat plate shape. The cap plate 210 may be disposed at the opening portion 206 of the case 200. The cap plate 210 may be disposed parallel to the bottom portion 201 of the case 200. The cap plate 210 may be seated on an upper end of the case 200 (for example, in the +Z-axis direction). In an embodiment, the cap plate 210 may be seated on the upper ends of the front surface portion 202, the rear surface portion 203, the first side surface portion 204, and the second side surface portion 205 (for example, in the +Z-axis direction). The cap plate 210 may be coupled to the case 200 by any of various types of coupling schemes, such as welding, bolting, and fitting. An inner surface of the cap plate 210 may be disposed to face the electrode assembly 250 in a third direction (for example, the Z-axis direction).

The cap plate 210 according to an embodiment may include a vent hole 211 and a vent 212 formed therein.

The vent hole 211 according to an embodiment may be formed to have a shape of a hole that vertically passes through both, or opposite, surfaces of the cap plate 210 in the third direction (for example, the Z-axis direction). The vent hole 211 may provide a path along which flame, gas, smoke, or the like inside the case 200 is discharged to the outside of the case 200 if the secondary battery 2 runs away due to an overcurrent, a short circuit, or the like. A cross-sectional shape of the vent hole 211 may have any of various shapes, such as an oval, circle, or polygon.

The vent 212 may be installed in the vent hole 211 to be opened and closed in response to a change in pressure in the case 200. That is, the vent 212 may close the vent hole 211 during normal operation of the secondary battery 2 to prevent or substantially prevent electrolyte or the like inside the case 200 from leaking to the outside of the case 200, or moisture, foreign substances, or the like from entering the case 200. The vent 212 may open the vent hole 211 at a time of thermal runaway of the secondary battery 2 to induce flame, gas, smoke, or the like inside the case 200 to be discharged to the outside of the case 200.

The vent 212 according to an embodiment may be formed to have a generally plate-like shape. The vent 212 can be fixed to the cap plate 210 by using any of various types of coupling schemes, such as welding, bolting, and fitting. The vent 212 may be disposed inside the vent hole 211 or may be disposed to face the vent hole 211 in the third direction on the upper or lower side of the cap plate 210.

In an embodiment, a thickness of the vent 212 may be smaller than that of the cap plate 210. Accordingly, the vent 212 may be easily ruptured or broken if pressure inside the case 200 increases. The vent 212 may include a notch that is formed to be concave toward the inner side of the vent 212 such that the vent 212 can be broken (e.g., preferentially broken) if the pressure inside the case 200 increases.

The cap plate 210 according to an embodiment may include an electrolyte injection port 213 that is formed to pass through the cap plate 210 and at which a sealing plug may be installed. The electrolyte injection port 213 may be disposed at an interval (e.g., a predetermined interval) from the vent hole 211 in the second direction or in a direction opposite to the second direction.

The cap plate 210 may include a cap plate body 2100.

The cap plate 210 may include a cap plate terminal hole 214 that passes through the cap plate body 2100. A terminal part 220 may be disposed in the cap plate terminal hole 214. The terminal part 220 may be disposed in the cap plate terminal hole 214 and be in contact with the electrode assembly 250.

The terminal part 220 may be disposed in the cap plate 210. The terminal part 220 may include a first terminal 221 and a second terminal 222.

The first terminal 221 may pass through the cap plate 210 and be disposed to face the electrode assembly 250. The first terminal 221 may be formed of an electrically conductive material, such as aluminum, nickel, or copper. The first terminal 221 may be electrically connected to a first electrode 251 of the electrode assembly 250. In an embodiment, the first electrode 251 functions as a positive electrode, and the first terminal 221 may be a positive electrode terminal of the secondary battery 2.

The first terminal 221 according to an embodiment may pass through the cap plate 210. An upper portion (for example, in the +Z-axis direction) of the first terminal 221 may protrude outward from the cap plate 210, and a lower portion (for example, in the -Z-axis direction) of the first terminal 221 may be disposed inside the case 200. In FIG. 3, an example in which the first terminal 221 has a cross-sectional shape of a quadrilateral is illustrated, but the cross-sectional shape of the first terminal 221 is not limited thereto, and may be any of various shapes, such as a circle, oval, and polygon.

The first insulating part 230 and the second insulating part 240 may be installed between the cap plate 210 and the first terminal 221. The first insulating part 230 and the second insulating part 240 may electrically insulate the cap plate 210 from the first terminal 221 and prevent or substantially prevent moisture or foreign substances from entering between the cap plate 210 and the first terminal 221.

The first insulating part 230 and the second insulating part 240 according to an embodiment may be formed of an insulating material, such as polyethylene (PE), polypropylene (PP), or polyethylene terephthalate (PET) rubber. The first insulating part 230 and the second insulating part 240 may be fixed between the cap plate 210 and the first terminal 221 by press fitting, injection molding, bonding, or the like.

The first insulating part 230 and the second insulating part 240 may include any of various materials, such as glass fiber, carbon black, polycarbonate, polyphthalamide, polyphenylene sulfide, acrylonitrile butadiene styrene copolymer (ABS) resin, acrylonitrile styrene acrylate (ASA) resin, polyamide (PA), polybutylene terephthalate (PBT), polyethylene, and polyetheretherketone.

The second terminal 222 may pass through the cap plate 210 and be disposed to face the electrode assembly 250. The second terminal 222 may be formed of an electrically conductive material, such as aluminum, nickel, or copper. The second terminal 222 may be electrically connected to a second electrode 252 of the electrode assembly 250. According to an embodiment, the second electrode 252 functions as a negative electrode, and the second terminal 222 may be illustrated as a negative electrode terminal of the secondary battery 2.

The second terminal 222 according to an embodiment may pass through the cap plate 210. An upper portion (for example, in the +Z-axis direction) of the second terminal 222 may protrude outward from the cap plate 210, and a lower portion (for example, in the -Z-axis direction) of the second terminal 222 may be disposed inside the case 200. In FIG. 3, an example in which the second terminal 222 has a cross-sectional shape of a quadrilateral is illustrated, but a cross-sectional shape of the second terminal 222 is not limited thereto and may have any of various shapes, such as a circle, an oval, and a polygon.

The first terminal 221 and the second terminal 222 may be spaced apart in the second direction (for example, the Y-axis direction). The first terminal 221 and the second terminal 222 may be disposed to face each other in the second direction with the vent 212 therebetween.

A first insulating part 230 and a second insulating part 240 may be installed between the cap plate 210 and the second terminal 222. The first insulating part 230 and the second insulating part 240 may electrically insulate the cap plate 210 from the second terminal 222 and prevent or substantially prevent moisture or foreign substances from flowing between the cap plate 210 and the second terminal 222.

The first insulating part 230 and the second insulating part 240 according to the present embodiment may be formed of an insulating material, such as polyethylene (PE), polypropylene (PP), or polyethylene terephthalate (PET) rubber. The first insulating part 230 and the second insulating part 240 are fixed between the cap plate 210 and the second terminal 222 by press fitting, injection molding, bonding, or the like.

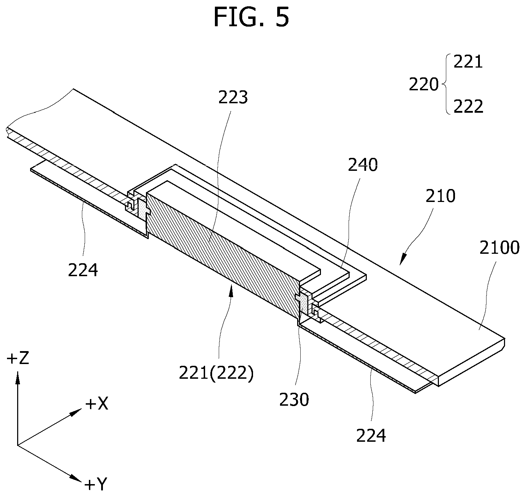

The first insulating part 230 and the second insulating part 240 will be described further with the description of FIGS. 5 to 7.

The electrode assembly 250 may function as a unit structure that performs power charging and discharging operations in the secondary battery. The electrode assembly 250 may be accommodated inside the case 200.

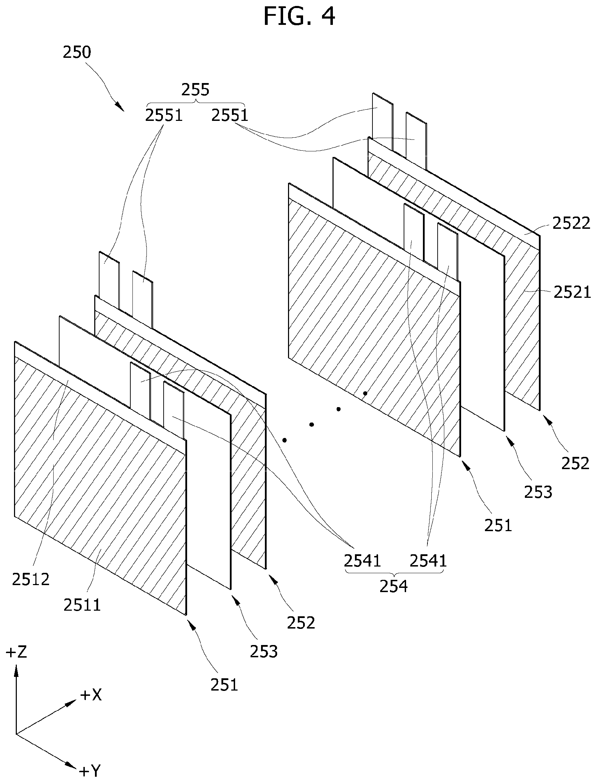

FIG. 4 is an exploded perspective view schematically illustrating a configuration of the electrode assembly according to an embodiment of the present invention.

Referring to FIGS. 2 to 4, the electrode assembly 250 according to an embodiment may include the first electrode 251, the second electrode 252, and a separator 253 disposed between the first electrode 251 and the second electrode 252. A plurality of the first electrodes 251, a plurality of the second electrodes 252, and a plurality of the separators 253 can be included.

Herein, an example in which the electrode assembly 250 has a stacked form in which a plurality of first electrodes 251, a plurality of separators 253, and a plurality of second electrodes 252 are sequentially stacked in the first direction (for example, the X-axis direction) will be described. However, the electrode assembly 250 is not limited to this form, and the electrode assembly 250 may have a form in which the first electrode 251, the separator 253, and the second electrodes 252 are stacked and wound around a winding axis in a clockwise or counterclockwise direction (for example, a jelly roll).

The first electrode 251 may function as any one of a positive electrode and a negative electrode of the electrode assembly 250. Herein, an example in which the first electrode 251 is the positive electrode of the electrode assembly 250 will be described. However, the first electrode 251 is not limited thereto, and the first electrode 251 may function as the negative electrode of the electrode assembly 250.

The first electrode 251 according to an embodiment may be formed to have a shape of a foil including a metal material, such as aluminum or an aluminum alloy. A type, size, shape, or the like of the first electrode 251 is not particularly limited as long as the first electrode 251 has conductivity without causing a chemical change in the secondary battery. A cross-sectional shape of the first electrode 251 may be any of various shapes in addition to the rectangular shape illustrated in FIG. 4.

A plurality of first electrodes 251 may be included. The plurality of first electrodes 251 may be arranged in the first direction (for example, the X-axis direction) between the front surface portion 202 and the rear surface portion 203 of the case 200. A number of the first electrodes 251 may be varied depending on a charging capacity of the secondary battery 2.

At least a portion of the first electrode 251 may be coated with a first active material layer 2511. Both, or opposite, surfaces of the first electrode 251 may be coated with a first active material layer 2511 or only one surface of the first electrode 251 may be coated with a first active material layer 2511.

In an embodiment, the first electrode 251 functions as a positive electrode, and the first active material layer 2511 may include a positive electrode active material.

The positive electrode active material may be a compound capable of reversible lithium intercalation and deintercalation (a lithiated intercalation compound). In an embodiment, the positive electrode active material may be at least one of composite oxides of lithium and a metal selected from cobalt, manganese, nickel, iron, and combinations thereof.

For example, the positive electrode active material may include at least one of a lithium-iron-phosphorus oxide (LiFePO₄, LFP), a lithium-manganese-iron-phosphorus oxide (LiMnFePO₄, LMFP), and a lithium-nickel-cobalt-manganese oxide (LiNiₓCo_{y}Mn_{z}O₂, LCM). Here, 0 < x < 1, 0 < y < 1, 0 < z < 1, and x + y + z = 1 may be satisfied. The positive electrode active material may include only one of the lithium-iron-phosphorus oxide (LiFePO₄, LFP), the lithium-manganese-iron-phosphorus oxide (LiMnFePO₄, LMFP), and the lithium-nickel-cobalt-manganese oxide (LiNiₓCo_{y}Mn_{z}O₂, LCM), or may include two or all of the lithium-iron-phosphorus oxide (LiFePO₄, LFP), the lithium-manganese-iron-phosphorus oxide (LiMnFePO₄, LMFP), and the lithium-nickel-cobalt-manganese oxide (LiNiₓCo_{y}Mn_{z}O₂, LCM).

The first active material layer 2511 may further include a positive electrode conductive material.

The positive electrode conductive material imparts conductivity to the first active material layer 2511, and may be any suitable material that does not cause a chemical change and is electronically conductive. Examples of the positive electrode conductive material may include carbon-based materials, such as natural graphite, artificial graphite, carbon black, acetylene black, Ketjen black, carbon fiber, carbon nanofibers, and carbon nanotubes, metal-based materials in the form of a metal powder or metal fiber containing copper, nickel, aluminum, silver, or the like, conductive polymers, such as polyphenylene derivatives, or mixtures thereof.

The first active material layer 2511 may further include a positive electrode binder.

The positive electrode binder firmly binds particles constituting a positive electrode active material to each other and also firmly binds the positive electrode active material to the first electrode 251.

Examples of the positive electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, and a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

If the aqueous binder is used as the positive electrode binder, a cellulose-based compound capable of imparting viscosity may be further included. The cellulose-based compound may be a mixture of one or more kinds of carboxymethyl cellulose, hydroxypropyl methyl cellulose, methyl cellulose, an alkali metal salt thereof, and the like. In an embodiment, the alkali metal may be Na, K, or Li.

The dry binder may be a polymer material capable of being fiberized and may be, for example, polytetrafluoroethylene, polyvinylidene fluoride, polyvinylidene fluoride-hexafluoropropylene copolymer, polyethylene oxide, or a combination thereof.

The first electrode 251 may include a first uncoated portion 2512 that is not coated with the first active material layer 2511. The first uncoated portion 2512 according to an embodiment may be disposed in an upper region (for example, in the +Z-axis direction) of the first electrode 251 disposed to face the opening portion 206 inside the case 200. However, the first uncoated portion 2512 is not limited to this form and, in an embodiment, may be formed over an entire edge region of the first electrode 251.

The second electrode 252 may function as any one of a positive electrode and a negative electrode of the electrode assembly 250. Herein, an example in which the second electrode 252 is the negative electrode of the electrode assembly 250 will be described. However, the second electrode 252 is not limited thereto, and the second electrode 252 may function as the positive electrode of the electrode assembly 250.

A plurality of the second electrodes 252 may be included. The plurality of second electrodes 252 may be arranged in the first direction (for example, the X-axis direction) between the front surface portion 202 and the rear surface portion 203 of the case 200. The first electrode 251 and the second electrode 252 may be alternately disposed in the first direction. The second electrode 252 may be spaced by a distance (e.g., a predetermined distance) from the first electrode 251 in the first direction.

The second electrode 252 according to an embodiment may be formed to have a shape of a foil including a metal material, such as copper, a copper alloy, nickel, or a nickel alloy. A type, size, shape, or the like of the second electrode 252 is not particularly limited as long as the second electrode 252 is conductive and does not cause a chemical change in the secondary battery. A cross-sectional shape of the first electrode 251 may have any of various shapes in addition to the rectangular shape illustrated in FIG. 4.

At least a portion of the second electrode 252 may be coated with a second active material layer 2521. Both, or opposite, surfaces of the second electrode 252 may be coated with the second active material layer 2521, or only one surface of the second electrode 252 may be coated with the second active material layer 2521.

In an embodiment, the second electrode 252 functions as the negative electrode, the second active material layer 2521 may include a negative electrode active material.

The negative electrode active material may include a material capable of reversible lithium-ion intercalation/deintercalation, lithium metal, an alloy of lithium metal, a material capable of lithium doping and de-doping, or a transition metal oxide.

The material capable of reversible lithium-ion intercalation/deintercalation may include a carbon-based negative electrode active material, such as crystalline carbon, amorphous carbon, or a combination thereof. Examples of the crystalline carbon may include graphite, such as natural graphite or artificial graphite in an amorphous, plate-like, flake-like, spherical, or fiber-like form, and examples of the amorphous carbon may include soft carbon or hard carbon, mesophase pitch carbides, and calcined coke.

The alloy of lithium metal may be an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of lithium doping and de-doping may be a Si-based negative electrode active material or a Sn-based negative electrode active material. The Si-based negative electrode active material may be silicon, a silicon-carbon composite, SiOx (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include secondary particles (cores) obtained by assembling primary silicon particles, and amorphous carbon coating layers (shells) located on surfaces of the secondary particles. In an embodiment, the amorphous carbon may be located between the primary silicon particles, for example, such that the primary silicon particles may be coated with the amorphous carbon. The secondary particles may be dispersed and present in an amorphous carbon matrix.

The silicon-carbon composite may further include crystalline carbon. For example, the silicon-carbon composite may include cores including crystalline carbon and silicon particles, and amorphous carbon coating layers located on surfaces of the cores.

The Si-based negative electrode active material or the Sn-based negative electrode active material may be used in combination with the carbon-based negative electrode active material.

The second active material layer 2521 may further include a negative electrode conductive material and a negative electrode binder.

The negative electrode conductive material imparts conductivity to the second active material layer 2521, and may be any suitable material that does not cause a chemical change and is electronically conductive. Examples of the negative electrode conductive material may include carbon-based materials, such as natural graphite, artificial graphite, carbon black, acetylene black, Ketjen black, carbon fiber, carbon nanofibers, and carbon nanotubes, metal-based materials in the form of a metal powder or metal fiber containing copper, nickel, aluminum, silver, or the like, conductive polymers, such as polyphenylene derivatives, or mixtures thereof.

The negative electrode binder firmly binds the particles constituting the negative electrode active material to each other and also firmly binds the negative electrode active material to the second electrode 252.

Examples of the negative electrode binder include a non-aqueous binder, an aqueous binder, a dry binder, and a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

If the aqueous binder is used as the negative electrode binder, a cellulose-based compound capable of imparting viscosity may be further included. The cellulose-based compound may be a mixture of one or more kinds of carboxymethyl cellulose, hydroxypropyl methyl cellulose, methyl cellulose, an alkali metal salt thereof, and the like. In an embodiment, the alkali metal may be Na, K, or Li.

The dry binder may be a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The second electrode 252 may include a second uncoated portion 2522 not coated with the second active material layer 2521. The second uncoated portion 2522 according to an embodiment may be disposed in an upper region (for example, in the +Z-axis direction) of the second electrode 252 that is disposed to face the opening portion 206 inside the case 200. However, the second uncoated portion 2522 is not limited to this form, and, in an embodiment, may be formed over an entire edge region of the second electrode 252.

The separator 253 may be disposed between the first electrode 251 and the second electrode 252. The separator 253 may prevent or substantially prevent a short circuit between the first electrode 251 and the second electrode 252 while allowing the movement of lithium ions between the first electrode 251 and the second electrode 252.

In an embodiment, the separator 253 may be disposed to completely surround a surface region of the electrode assembly 250. Accordingly, the separator 253 can prevent or substantially prevent the first electrode 251 and the second electrode 252 from being directly exposed to the outside of the electrode assembly 250.

In an embodiment, the separator 253 may be made of polyethylene, polypropylene, polyvinylidene fluoride, or a multilayer film including two or more layers of these materials, and may be a mixed multilayer film, such as a two-layer separator including polyethylene and polypropylene, a three-layer separator including polyethylene, polypropylene, and polyethylene, or a three-layer separator including polypropylene, polyethylene, and polypropylene.

The separator 253 may include a porous substrate, and a coating layer including an organic material, an inorganic material, or a combination thereof located on one or both sides of the porous substrate.

The porous substrate may be a polymer film formed of any polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more of the materials.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but is not limited thereto.

The organic material and the inorganic material may be mixed and present in one coating layer, or may be present in a form in which a coating layer including the organic material and a coating layer including the inorganic material are stacked.

The secondary battery 2 according to an embodiment may further include a first tab member 254, a second tab member 255, and an electrode assembly fixing member 256.

The first tab member 254 may electrically connect the first electrode 251 and the first terminal 221.

The first tab member 254 may be connected to the first electrode 251 and extend from the electrode assembly 250 toward the cap plate 210. In an embodiment, the first electrode 251 is illustrated as the positive electrode, and the first tab member 254 may function as a positive electrode tab of the secondary battery 2. However, the first tab member 254 is not limited thereto, and if the first electrode 251 is the negative electrode, the first tab member 254 may function as a negative electrode tab of the secondary battery 2.

The first tab member 254 may include first tabs 2541.

The first tab 2541 according to an embodiment may have a form of a foil that extends in the third direction (for example, the Z-axis direction) from the first uncoated portion 2512 of the first electrode 251. The first tab 2541 may have a generally rectangular shape. However, the shape of the first tab 2541 is not limited thereto, and may have any of various shapes.

In an embodiment, the first tab 2541 may be formed integrally with the first electrode 251. For example, the first tab 2541 may be a remaining region of the first uncoated portion 2512 that remains after a portion of the first uncoated portion 2512 is cut or removed by notching processing or the like. In another embodiment, the first tab 2541 may be manufactured separately from the first electrode 251 and then connected to the first uncoated portion 2512 by welding or the like. In an embodiment, a material of the first tab 2541 may be the same as a material of the first electrode 251.

A plurality of the first tabs 2541 may be provided. The number of first tabs 2541 may be the same as the number of first electrodes 251. In an embodiment, a plurality of first tabs 2541 may be included for one first electrode 251. According to an embodiment, the plurality of first tabs 2541 may be disposed in the second direction (for example, the Y-axis direction).

The respective first tabs 2541 may individually extend from the first uncoated portions 2512 of the different first electrodes 251. The adjacent first tabs 2541 may be disposed to face each other in the first direction (for example, the X-axis direction). The adjacent first tabs 2541 may be disposed parallel to each other. Accordingly, the first tab member 254 according to an embodiment may be a set of a plurality of first tabs 2541 stacked in the first direction. The adjacent first tabs 2541 may be in contact with each other, and may be spaced apart by a thickness of the separator 253.

The first tab member 254 and the first terminal 221 can be connected.

The second tab member 255 may function as a component that electrically connects the second electrode 252 and the second terminal 222.

The second tab member 255 may be connected to the second electrode 252 and extend from the electrode assembly 250 toward the cap plate 210. In an embodiment, the second electrode 252 is illustrated as the negative electrode, and the second tab member 255 may function as a negative electrode tab of the secondary battery 2. However, the second tab member 255 is not limited thereto, and if the second electrode 252 is a positive electrode, the second tab member 255 may function as a positive electrode tab of the secondary battery 2. The first tab member 254 and the second tab member 255 may be spaced apart in the second direction (for example, the Y-axis direction).

The second tab member 255 according to an embodiment may include second tabs 2551.

The second tab 2551 according to an embodiment may have a shape of a foil that extends in the third direction (for example, the Z-axis direction) from the second uncoated portion 2522 of the second electrode 252. The second tab 2551 may have a generally rectangular shape. However, a shape of the second tab 2551 is not limited thereto, and may have any of various shapes.

In an embodiment, the second tab 2551 may be formed integrally with the second electrode 252. For example, the second tab 2551 may be a remaining region of the second uncoated portion 2522 that remains after a portion of the second uncoated portion 2522 is cut or removed by notching processing or the like. In another embodiment, the second tab 2551 may be manufactured separately from the second electrode 252 and then connected to the second uncoated portion 2522 by welding or the like. In an embodiment, a material of the second tab 2551 may be the same as a material of the second electrode 252.

A plurality of the second tabs 2551 may be included. The number of the second tabs 2551 may be the same as the number of the second electrodes 252. In an embodiment, a plurality of second tabs 2551 may be included in one second electrode 252. According to an embodiment, the plurality of second tabs 2551 may be disposed in the second direction (for example, the Y-axis direction).

The respective second tabs 2551 may individually extend from the second uncoated portions 2522 of the different second electrodes 252. The adjacent second tabs 2551 may be disposed to face each other in the first direction (for example, the X-axis direction). The adjacent second tabs 2551 may be disposed in parallel to each other. Accordingly, the second tab member 255 according to an embodiment may be a set of a plurality of second tabs 2551 stacked in the first direction. The adjacent second tabs 2551 may be in contact with each other, and may be spaced apart by the thickness of the separator 253.

In the battery module M according to an embodiment, a plurality of secondary batteries 2 may be included. The plurality of secondary batteries 2 may be arranged in the first direction (for example, the X-axis direction) inside the housing 1. A number of the secondary batteries 2 may be varied depending on a size, shape, or the like of the housing 1.

The electrode assembly fixing member 256 may be disposed on a surface of the electrode assembly 250. According to an embodiment, the electrode assembly fixing member 256 may be disposed on a surface (for example, in the -X-axis direction), side surfaces (for example, in the +Y-axis direction), and another side (for example, in the +X-axis direction) of the electrode assembly 250. According to another embodiment, the electrode assembly fixing member 256 may be disposed on a surface (for example, in the -X-axis direction), an upper surface or a lower surface (for example, in the Z-axis direction), and another surface (for example, in the +X-axis direction) of the electrode assembly 250. In an embodiment, the electrode assembly fixing member 256 is disposed on the surface of the electrode assembly 250, and a shape of the electrode assembly 250 may be maintained.

According to an embodiment, the electrode assembly fixing member 256 may be fixed to the surface of the electrode assembly 250. In an embodiment, the electrode assembly fixing member 256 may be adhered to the surface of the electrode assembly 250. The electrode assembly fixing member 256 may include an insulating material. Accordingly, the surface of the electrode assembly 250 may be disposed apart from an inner surface of the case 200.

The first terminal 221 of one of the adjacent secondary batteries 2 of the pair and the second terminal 222 of the other of the adjacent secondary batteries 2 of the pair may be disposed to face each other in the first direction (for example, the X-axis direction). That is, the front surface portion 202 of one of the adjacent secondary batteries 2 may be disposed to face the rear surface portion 203 of the other of the secondary batteries 2.

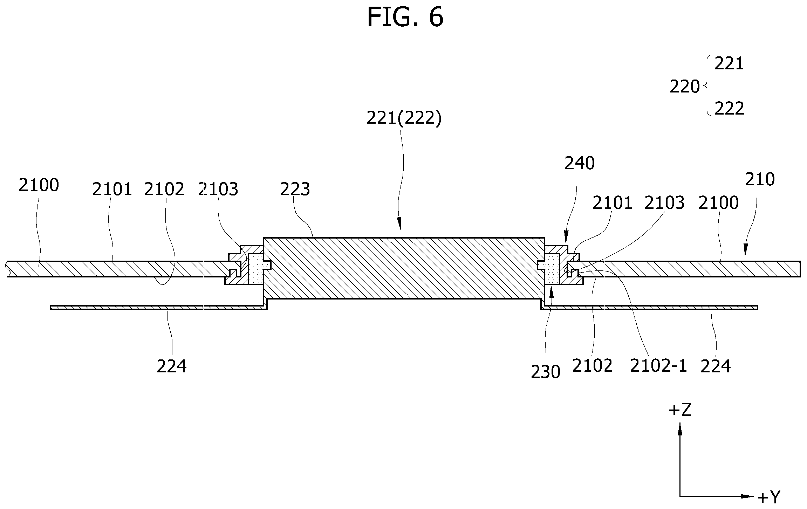

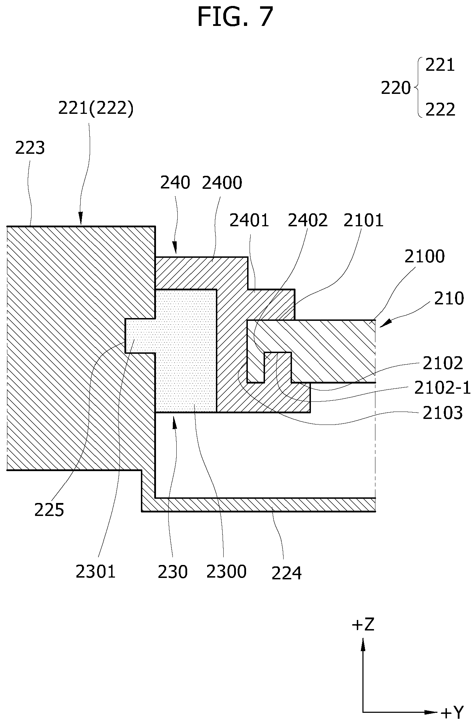

FIG. 5 is a cross-sectional perspective view of the cap plate and the terminal part according to an embodiment of the present invention; FIG. 6 is a cross-sectional view of the cap plate and the terminal part according to an embodiment of the present invention; and FIG. 7 is a cross-sectional view of the terminal part, the first insulating part, and the second insulating part according to an embodiment of the present invention.

An embodiment of the cap plate 210 and the terminal part 220 will be described with reference to FIGS. 5 to 7.

The cap plate 210 may include a cap plate terminal hole (for example, the cap plate terminal hole 214 in FIG. 3) passing through the cap plate body 2100.

The terminal part 220, the first insulating part 230, and the second insulating part 240 may be disposed in the cap plate terminal hole 214.

The terminal part 220 may include a first terminal 221 and a second terminal 222. The terminal part 220 may be disposed to pass through the cap plate terminal hole 214.

An upper portion (for example, in the +Z-axis direction) of the terminal part 220 may be disposed to protrude upward (for example, in the +Z-axis direction) from the cap plate 210. According to an embodiment, a terminal contact part 223 may be disposed on the upper side of the terminal part 220. The terminal contact part 223 may be in contact with a bus bar (for example, a bus bar 3 in FIG. 1). The terminal contact part 223 may be disposed to protrude upward (for example, in the +Z-axis direction) from the cap plate 210.

A lower portion (for example, in the -Z-axis direction) of the terminal part 220 may be disposed on the lower side (for example, in the -Z-axis direction) from the cap plate 210. According to an embodiment, a terminal current collection part 224 may be disposed below the terminal part 220. The terminal current collection part 224 may be disposed lower than the cap plate 210 and may extend in a direction (for example, the first direction or the second direction) perpendicular to the third direction (for example, the Z-axis direction). The terminal current collection part 224 may be disposed to face a lower surface (for example, in the -Z-axis direction) of the cap plate 210.

The terminal current collection part 224 may be in contact with the first tab member 254 and/or the second tab member 255. In an embodiment, the terminal current collection part 224 is in contact with and electrically connected to the first tab member 254 and/or the second tab member 255, and the terminal current collection part 224 may be electrically connected to the electrode assembly 250. Accordingly, the first terminal 221 and the second terminal 222 connected to the terminal current collection part 224 may function as a positive electrode or negative electrode.

The first insulating part 230 and the second insulating part 240 may be disposed between the cap plate 210 and the terminal part 220.

The first insulating part 230 and the second insulating part 240 may separate (e.g., electrically separate) the cap plate 210 from the terminal part 220. Accordingly, the cap plate 210 and the terminal part 220 can be electrically insulated.

The first insulating part 230 and the second insulating part 240 may be disposed between the cap plate 210 and the terminal part 220 to fill a space between the cap plate 210 and the terminal part 220. As such, foreign substances may be prevented or substantially prevented from entering the secondary battery 2.

The first insulating part 230 may be disposed between the cap plate 210 and the terminal part 220. According to an embodiment, the first insulating part 230 may be disposed between the terminal part 220 and the second insulating part 240.

The first insulating part 230 may be in contact with the terminal part 220. According to an embodiment, the first insulating part 230 may be in contact with the terminal part 220 and fixed to the terminal part 220.

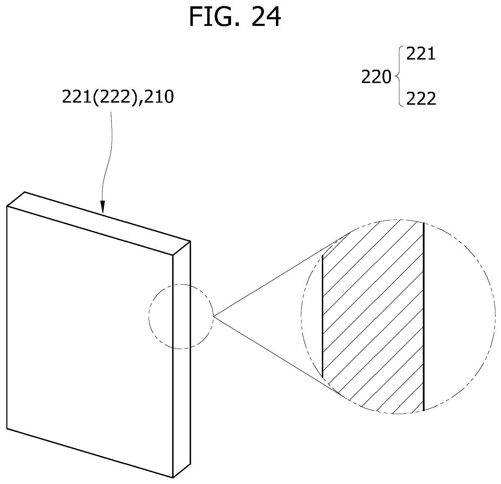

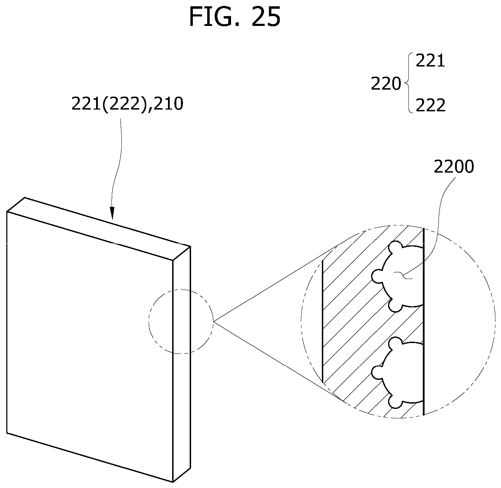

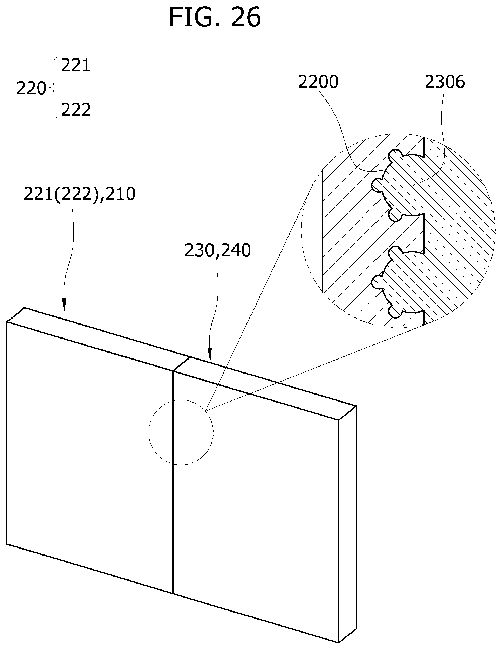

The first insulating part 230 may be bonded to the terminal part 220. The bonding of the first insulating part 230 to the terminal part 220 will be described further later along with the description of FIGS. 24 to 26.

The first insulating part 230 may include a first insulating body 2300 and a first insulating protrusion 2301. The first insulating protrusion 2301 may protrude from the first insulating body 2300. According to an embodiment, the first insulating protrusion 2301 may protrude in a direction parallel to a first direction (for example, the X-axis direction) or a second direction (for example, the Y-axis direction) from the first insulating body 2300.

The first insulating protrusion 2301 may be inserted into the terminal part 220. According to an embodiment, the first insulating protrusion 2301 may be inserted into the terminal contact part 223 of the terminal part 220. In an embodiment, the first insulating protrusion 2301 may be inserted into the terminal fixing recess 225 that is formed to be concave in the terminal contact part 223. In an embodiment, the first insulating protrusion 2301 is inserted into the terminal fixing recess 225, and the coupling strength between the first insulating part 230 and the terminal part 220 can be improved.

In an embodiment, the first insulating part 230 may be injection-molded into the terminal part 220. However, a method of bonding the first insulating part 230 and the terminal part 220 is not limited to injection molding, and the first insulating part 230 and the terminal part 220 may be bonded in any of various ways.

The second insulating part 240 may be disposed between the cap plate 210 and the terminal part 220. According to an embodiment, the second insulating part 240 may be disposed between the first insulating part 230 and the cap plate 210. The second insulating part 240 may be disposed between the first insulating part 230 and the cap plate 210 and in contact with the terminal part 220.

The second insulating part 240 may be in contact with the cap plate 210. According to an embodiment, the second insulating part 240 may be in contact with the cap plate 210 and fixed to the cap plate 210.

The second insulating part 240 may be bonded to the cap plate 210. The bonding of the second insulating part 240 to the cap plate 210 will be described further later with reference to FIGS. 24 to 26.

In an embodiment, the second insulating part 240 may include a second insulating body 2400, a second insulating outer portion 2401, and a second insulating protrusion portion 2402. The second insulating outer portion 2401 and the second insulating protrusion portion 2402 may protrude from the second insulating body 2400.

In an embodiment, the second insulating body 2400 may be in contact with an upper surface (for example, in the +Z-axis direction), a side surface (for example, in the Y-axis direction), and a lower surface (for example, in the -Z-axis direction) of the cap plate 210. The second insulating body 2400 may be in contact with the terminal part 220.

The second insulating outer portion 2401 may protrude from the second insulating body 2400. According to an embodiment, the second insulating outer portion 2401 may protrude from the second insulating body 2400 and extend along an upper surface (for example, in the +Z-axis direction) of the cap plate 210. In an embodiment, the second insulating outer portion 2401 may protrude from the second insulating body 2400 and may be in contact with a cap plate body outer surface 2101, which is an upper surface (for example, in the +Z-axis direction) of the cap plate body 2100. The second insulating outer portion 2401 may be coupled to the cap plate body outer surface 2101.

The second insulating body 2400 may be in contact with a side surface (for example, in the Y-axis direction) of the cap plate body 2100. According to an embodiment, the second insulating body 2400 may be in contact with a cap plate body terminal surface 2103, which is a side surface of the cap plate terminal hole 214 formed in the cap plate 210.

The second insulating body 2400 may be in contact with a lower surface (for example, in the -Z-axis direction) of the cap plate body 2100. According to an embodiment, the second insulating body 2400 may be in contact with a cap plate body inner surface 2102, which is a lower surface of the cap plate body 2100.

The second insulating part 240 may be inserted into the cap plate body inner surface 2102 of the cap plate body 2100. According to an embodiment, the second insulating protrusion portion 2402 may protrude upward (for example, in the +Z-axis direction) from the second insulating body 2400. According to an embodiment, the second insulating protrusion portion 2402 may be inserted into the cap plate 210. In an embodiment, the second insulating protrusion portion 2402 may be inserted into a cap plate body inner groove 2102-1 that is formed as a concave groove in the cap plate body inner surface 2102. In an embodiment, the second insulating protrusion portion 2402 is inserted into the cap plate body inner groove 2102-1, and the coupling strength between the second insulating part 240 and the cap plate 210 can be improved. The second insulating protrusion portion 2402 may be inserted into the cap plate body inner groove 2102-1 and coupled to the cap plate 210.

A portion of the second insulating body 2400 may be disposed between the terminal current collection part 224 and the cap plate body 2100. According to an embodiment, the second insulating body 2400 may be disposed apart from the terminal current collection part 224.

In an embodiment, the second insulating part 240 may be injection-molded into the cap plate 210. However, a method of bonding the second insulating part 240 to the cap plate 210 is not limited to injection molding, and the second insulating part 240 and the cap plate 210 may be bonded in any of various ways.

The first insulating part 230 and the second insulating part 240 may be disposed to be in contact with each other. According to an embodiment, the first insulating part 230 and the second insulating part 240 may be fixed in contact with each other.

In an embodiment, the first insulating part 230 and the second insulating part 240 may be fixed by bonding or by welding. According to an embodiment, the first insulating part 230 and the second insulating part 240 may be fixed by laser welding.

In an embodiment, the first insulating part 230 may absorb a laser and the second insulating part 240 may transmit the laser. The laser irradiated from the outside of the second insulating part 240 may be transmitted through the second insulating part 240 and absorbed by the first insulating part 230. Heat is generated in the first insulating part 230 that absorbs the laser, such that the first insulating part 230 and the second insulating part 240 can be welded. Thus, the first insulating part 230 and the second insulating part 240 are welded, and the coupling strength between the first insulating part 230 and the second insulating part 240 can be improved.

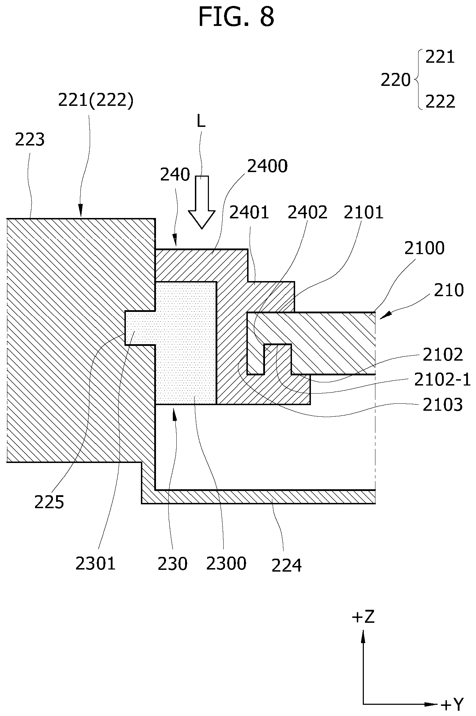

FIGS. 8 to 10 are cross-sectional views illustrating a process of coupling the first insulating part and the second insulating part according to an embodiment of the present invention.

FIGS. 8 to 10 illustrate an example in which the first insulating part 230 and the second insulating part 240 are welded by a laser L.

As illustrated in FIG. 8, the laser L may travel in a direction (for example, the Z-axis direction) perpendicular to the cap plate 210, be transmitted through the second insulating part 240, and be absorbed by the first insulating part 230.

In FIG. 8, in an embodiment, a thickness (for example, in the Z-axis direction) of the second insulating body 2400 transmitting the laser L may be approximately 5 mm or less. According to an embodiment, the thickness of the second insulating body 2400 may be approximately 3 mm. In an embodiment, the thickness of the second insulating body 2400 may be approximately 2 mm.

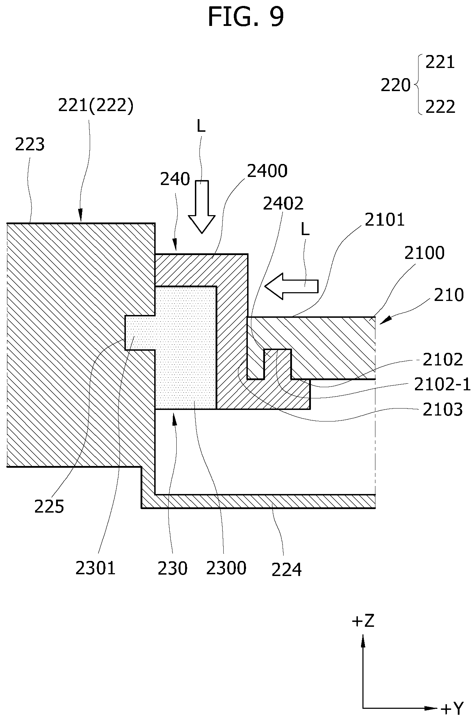

As illustrated in FIG. 9, the laser L may travel in a direction (for example, between the Z-axis and the Y-axis or between the Z-axis and the X-axis) oblique to the cap plate 210, be transmitted through the second insulating part 240, and be absorbed by the first insulating part 230.

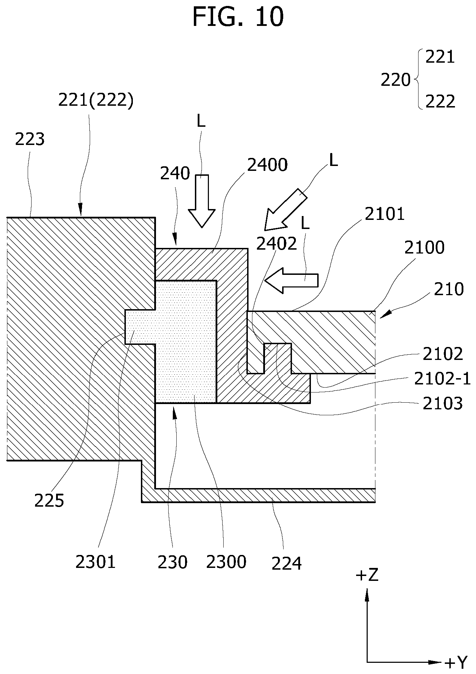

As illustrated in FIG. 10, the laser L may travel in a direction (for example, the Y-axis direction or the X-axis direction) parallel to the cap plate 210, be transmitted through the second insulating part 240, and be absorbed by the first insulating part 230.

The laser L transmitted through the second insulating part 240 may be absorbed by the first insulating part 230, and the first insulating part 230 absorbing the laser L may be coupled to the second insulating part 240. According to an embodiment, the first insulating part 230 may absorb the laser L, a temperature of the first insulating part 230 may increase, and the first insulating part 230 and the second insulating part 240 may be welded due to the increase in temperature.

Hence, the first insulating part 230 and the second insulating part 240 are welded, and the coupling strength of the first insulating part 230 and the second insulating part 240 can be advantageously improved. Further, since the first insulating part 230 and the second insulating part 240 are welded, foreign substances can be prevented or substantially prevented from entering the secondary battery 2.

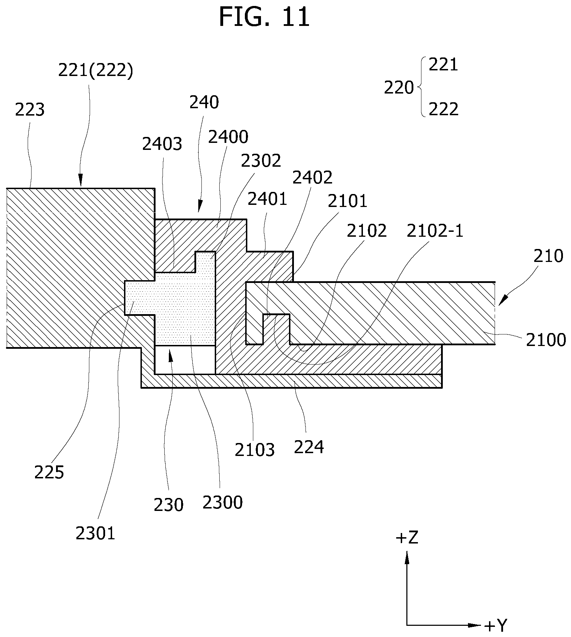

FIG. 11 is a cross-sectional view of the terminal part, the first insulating part, and the second insulating part according to another embodiment of the present invention.

The first insulating part 230 may include a first insulating fixing portion 2302 protruding from the first insulating body 2300.

The first insulating fixing portion 2302 may protrude upward (for example, in the +Z-axis direction) from the first insulating body 2300. According to an embodiment, the first insulating fixing portion 2302 protruding upward from the first insulating body 2300 may be inserted into the second insulating part 240. In an embodiment, the first insulating fixing portion 2302 may be inserted into the second insulating body 2400.

The second insulating part 240 may include a second insulating fixing portion 2403 protruding from the second insulating body 2400.

The second insulating fixing portion 2403 may protrude downward (for example, in the -Z-axis direction) from the second insulating body 2400. According to an embodiment, the second insulating fixing portion 2403 protruding downward from the second insulating body 2400 may be disposed between the first insulating body 2300 and the terminal part 220.

Thus, the first insulating fixing portion 2302 is inserted into the second insulating body 2400 and the second insulating fixing portion 2403 is disposed between the first insulating body 2300 and the terminal part 220, and assemblability and tight contact of the first insulating part 230 and the second insulating part 240 can be improved.

Further, the first insulating fixing portion 2302 is disposed close to an upper surface (for example, the +Z-axis direction) of the second insulating body 2400, and efficiency of laser welding can be improved.

The second insulating body 2400 may be disposed between the cap plate body 2100 and the terminal current collection part 224. The second insulating body 2400 is disposed between the cap plate body 2100 and the terminal current collection part 224, and the cap plate 210 and the terminal current collection part 224 may be spaced apart and insulated. According to an embodiment, the second insulating body 2400 may be in contact with the cap plate body 2100 and the terminal current collection part 224.

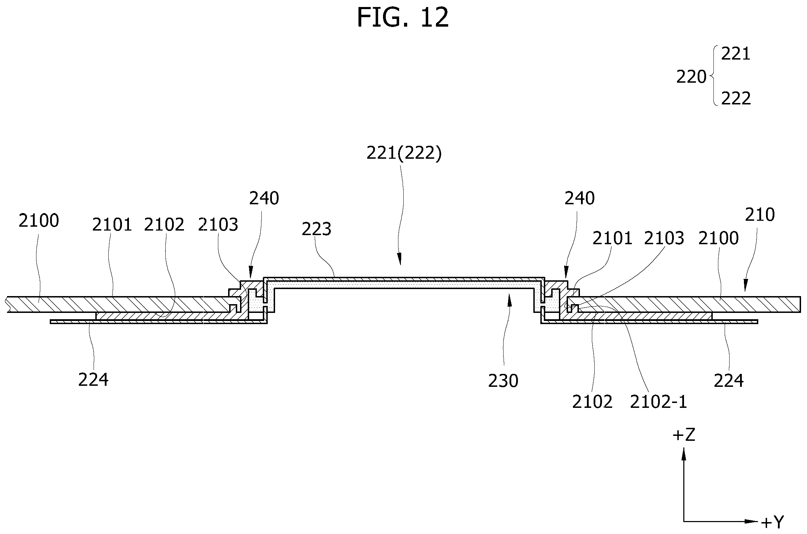

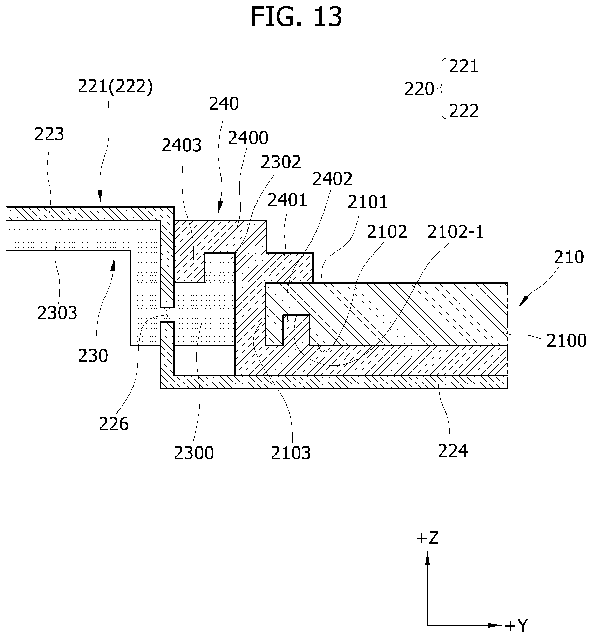

FIG. 12 is a cross-sectional view of the terminal part, the first insulating part, and the second insulating part according to another embodiment of the present invention; and FIG. 13 is a cross-sectional view of the terminal part, the first insulating part, and the second insulating part of FIG. 12.

The first insulating part 230 may include a first insulating support portion 2303 extending from the first insulating body 2300. The first insulating support portion 2303 may extend from the first insulating body 2300 and be disposed below the terminal contact part 223 (for example, in the -Z-axis direction). According to an embodiment, the first insulating support portion 2303 may be disposed to be in contact with a lower side of the terminal contact part 223.

The first insulating part 230 may pass through a side portion (for example, in the Y-axis direction) of the terminal part 220. According to an embodiment, the terminal part 220 may include a terminal fixing hole 226 that passes through the terminal contact part 223. The first insulating body 2300 and the first insulating support portion 2303 may be connected through the terminal fixing hole 226. Thus, the first insulating support portion 2303 is connected to the first insulating body 2300 through the terminal fixing hole 226 and is in contact with the lower side (for example, in the -Z-axis direction) of the terminal contact part 223, and the coupling strength between the terminal part 220 and the first insulating part 230 can be improved. Further, the first insulating part 230 supports the terminal part 220, and a positional variation of the terminal part 220 can be reduced and stability of the terminal part 220 can advantageously be improved.

In an embodiment, the terminal contact part 223 illustrated in FIGS. 12 and 13 may be provided in a generally U-shaped form, unlike the terminal contact part 223 illustrated in FIG. 11. In an embodiment, the terminal contact part 223 is provided in a generally U-shaped form, and an amount of metal required for manufacture of the terminal contact part 223 can be reduced. In an embodiment, the terminal contact part 223 may include a metal, such as aluminum or copper.

The first insulating support portion 2303 may extend from the first insulating body 2300 and be bent upward (for example, in the +Z-axis direction).

If a thickness (for example, in the Z-axis direction) of the terminal contact part 223 illustrated in FIG. 11 is compared with a thickness of the terminal contact part 223 illustrated in FIG. 13, the rigidity of the terminal contact part 223 illustrated in FIG. 13 may be lower than that of the terminal contact part 223 illustrated in FIG. 11.

In an embodiment, the first insulating support portion 2303 is in contact with the terminal contact part 223 and supports the terminal contact part 223, and structural stability of the terminal contact part 223 can be improved.

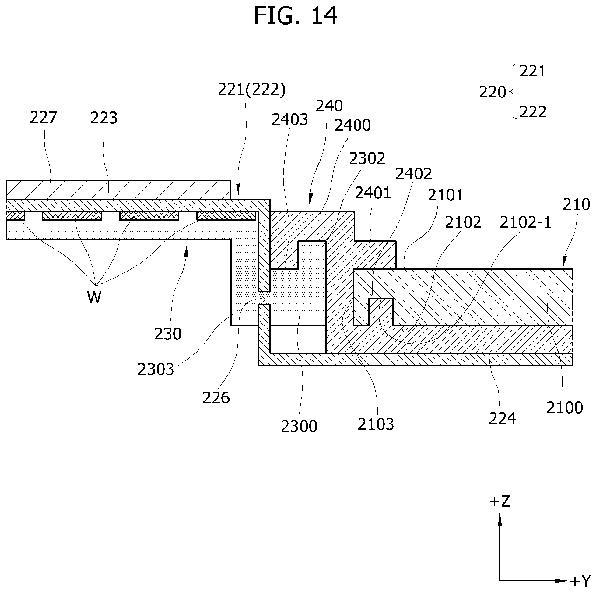

FIG. 14 is a cross-sectional view of the terminal part, the first insulating part, and the second insulating part according to another embodiment of the present invention.

Referring to FIG. 14, a terminal plate 227 may be disposed on the upper side (for example, in the +Z-axis direction) of the terminal contact part 223. The terminal plate 227 may be fixed to the terminal contact part 223. A lower surface (for example, in the -Z-axis direction) of the terminal plate 227 may be in contact with the terminal contact part 223, and an upper surface (for example, in the +Z-axis direction) of the terminal plate 227 may be in contact with the bus bar 3.

In an embodiment, the terminal plate 227 is disposed on the upper side of the terminal contact part 223, and the terminal contact part 223 with a reduced thickness (for example, in the Z-axis direction) can be reinforced.

In an embodiment, the terminal part 220 and the terminal plate 227 may be coupled after the terminal part 220 and the first insulating part 230 are coupled. In another embodiment, the terminal part 220 and the terminal plate 227 may be coupled before the terminal part 220 and the first insulating part 230 are coupled.

In an embodiment, the terminal part 220 and the terminal plate 227 may be coupled by welding. The terminal part 220 and the terminal plate 227 may be welded below (for example, in the -Z-axis direction) the terminal contact part 223. Accordingly, a welding portion W connecting the terminal part 220 and the terminal plate 227 may be disposed below the terminal contact part 223.

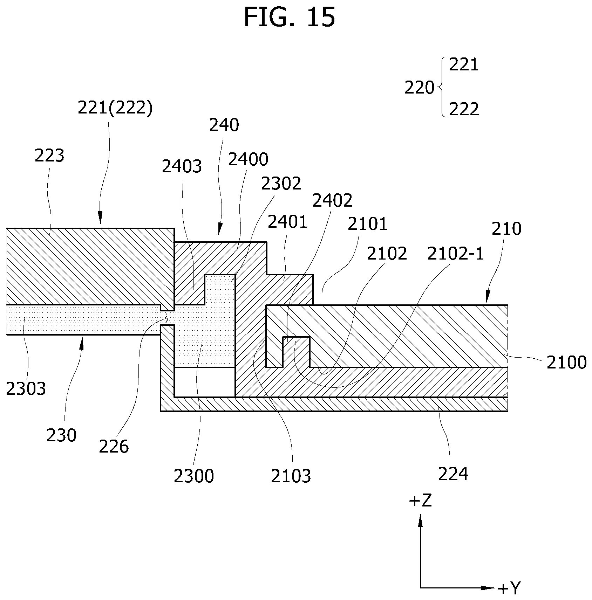

FIG. 15 is a cross-sectional view of the terminal part, the first insulating part, and the second insulating part according to another embodiment of the present invention.

The first insulating support portion 2303 may extend from the first insulating body 2300. According to an embodiment, the first insulating support portion 2303 may extend in a direction (for example, in the Y-axis direction or the X-axis direction) parallel to the cap plate body 2100 from the first insulating body 2300. The first insulating body 2300 and the first insulating support portion 2303 may be connected through the terminal fixing hole 226 formed in the terminal contact part 223.

Thus, the first insulating support portion 2303 and the first insulating body 2300 may be disposed at approximately a same height (for example, in the Z-axis direction), and structural stability of the terminal contact part 223 can advantageously be improved.

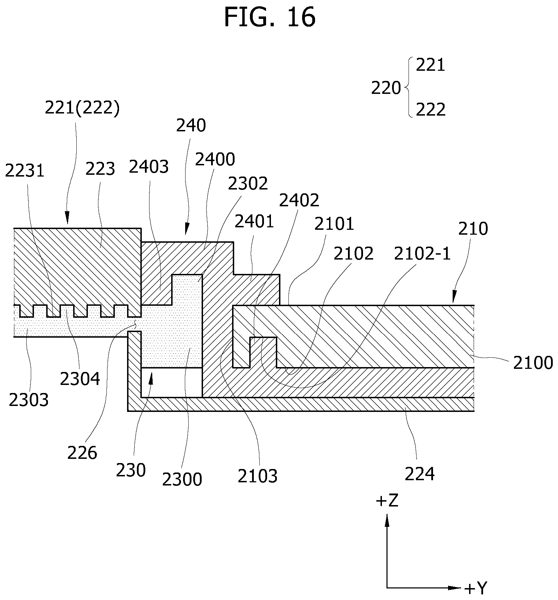

FIG. 16 is a cross-sectional view of the terminal part, the first insulating part, and the second insulating part according to another embodiment of the present invention.

The first insulating part 230 includes a first insulating uneven portion 2304 formed as an uneven portion in the first insulating support portion 2303. The first insulating uneven portion 2304 may be formed as an uneven portion in the first insulating support portion 2303 and inserted into the terminal contact part 223.

The terminal part 220 may include a terminal contact uneven portion 2231 formed as an uneven portion on the terminal contact part 223. The terminal contact uneven portion 2231 may be formed as an uneven portion in a lower portion (for example, in the -Z axis direction) of the terminal contact part 223 and coupled to the first insulating uneven portion 2304.

In an embodiment, the first insulating uneven portion 2304 and the terminal contact uneven portion 2231 are engaged and coupled to each other, and the coupling strength between the first insulating support portion 2303 and the terminal contact part 223 can advantageously be improved.

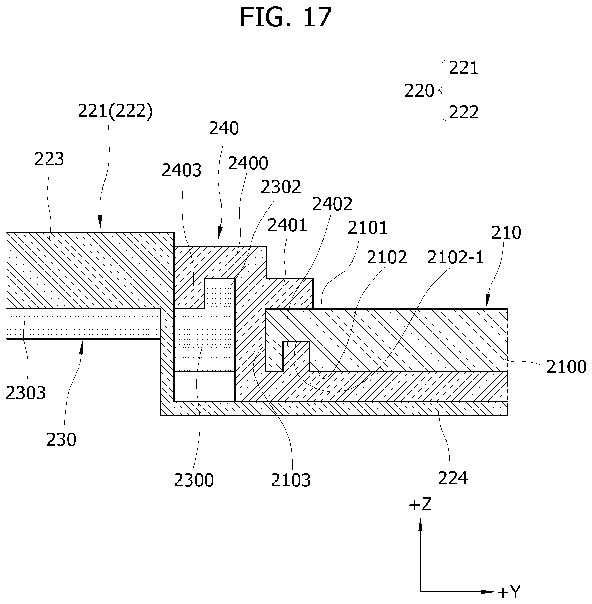

FIG. 17 is a cross-sectional view of the terminal part, the first insulating part, and the second insulating part according to another embodiment of the present invention.

The first insulating body 2300 and the first insulating support portion 2303 may be spaced apart from each other. The first insulating body 2300 may be disposed on the outer side (the +Y-axis direction in FIG. 17) of the terminal contact part 223, and the first insulating support portion 2303 may be disposed on the inner side (-Y-axis direction in FIG. 17) of the terminal contact part 223.

The first insulating body 2300 may be coupled to the outer side of the terminal contact part 223 to support the terminal contact part 223. The first insulating support portion 2303 may be coupled to the inner side of the terminal contact part 223 to support the terminal contact part 223.

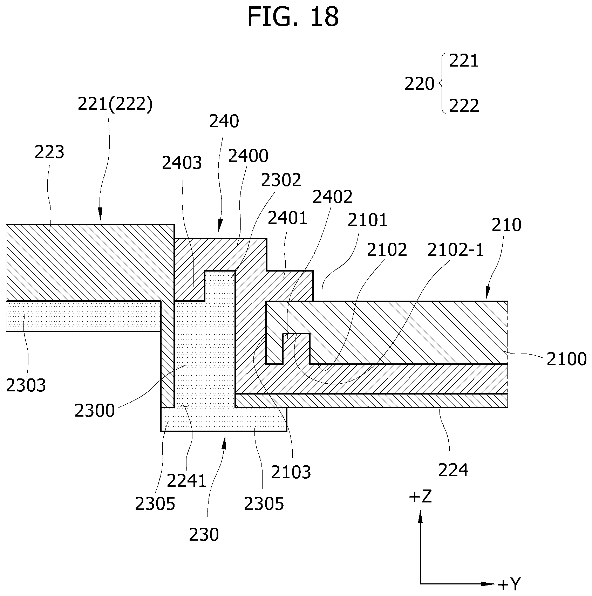

FIG. 18 is a cross-sectional view of the terminal part, the first insulating part, and the second insulating part according to another embodiment of the present invention.

The first insulating part 230 may pass through a lower portion (for example, in the Z-axis direction) of the terminal part 220. According to an embodiment, the terminal part 220 may include a terminal current collection hole 2241 provided as a hole passing through the terminal current collection part 224. The terminal current collection hole 2241 may pass through the terminal current collection part 224 in an up-down direction (for example, in the Z-axis direction).

The first insulating part 230 may include a first insulating wing portion 2305 disposed on the lower side (for example, in the -Z-axis direction) of the terminal current collection part 224. The first insulating wing portion 2305 may be disposed to be in contact with the lower side of the terminal current collection part 224. The first insulating wing portion 2305 is disposed to be in contact with the lower side of the terminal current collection part 224, and the first insulating wing portion 2305 can support the terminal current collection part 224.

The first insulating body 2300 and the first insulating wing portion 2305 may be connected to each other. According to an embodiment, the first insulating body 2300 and the first insulating wing portion 2305 may be connected through the terminal current collection hole 2241.

In an embodiment, a thickness (for example, in the Z-axis direction) of the first insulating wing portion 2305 may be smaller than about 2 mm. According to an embodiment, the thickness of the first insulating wing portion 2305 may be about 1 mm. In an embodiment, the thickness of the first insulating wing portion 2305 may be about 0.6 mm to 0.9 mm.

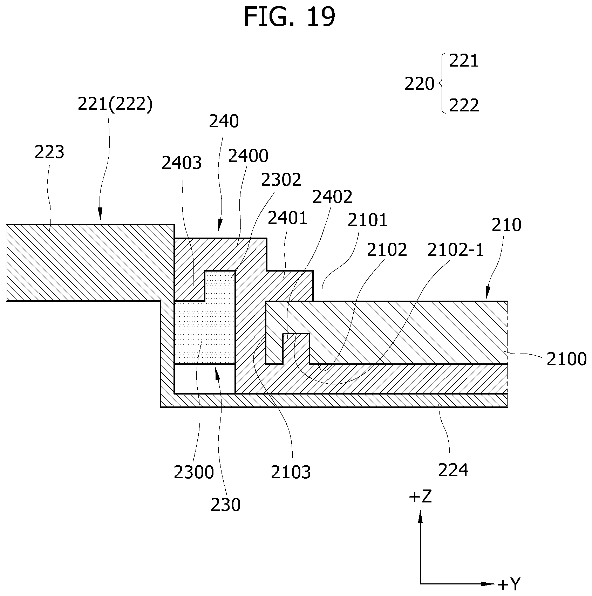

FIG. 19 is a cross-sectional view of the terminal part, the first insulating part, and the second insulating part according to another embodiment of the present invention.

The first insulating body 2300 may be disposed on the outside (in the +Y-axis direction in FIG. 19) of the terminal part 220. According to an embodiment, the first insulating body 2300 may be disposed between the terminal contact part 223 and the second insulating part 240. The first insulating body 2300 may be disposed to be surrounded by the terminal contact part 223, the second insulating part 240, and the terminal current collection part 224, thereby preventing or substantially preventing foreign substances from flowing into the secondary battery 2 from the outside of the secondary battery 2.

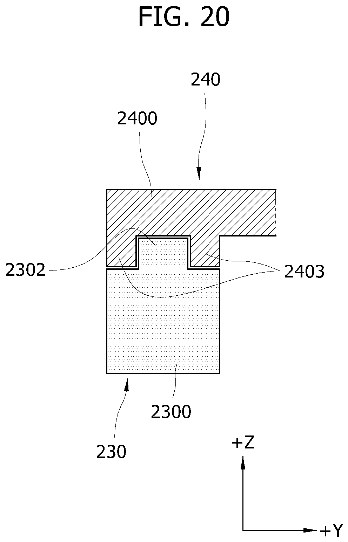

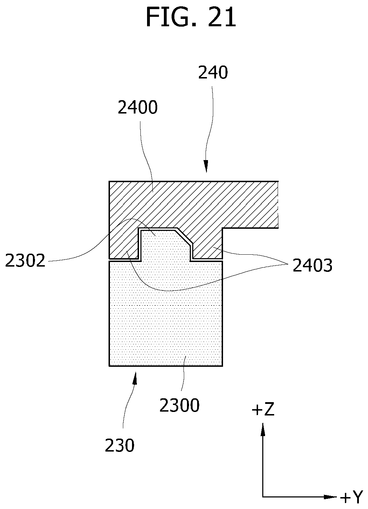

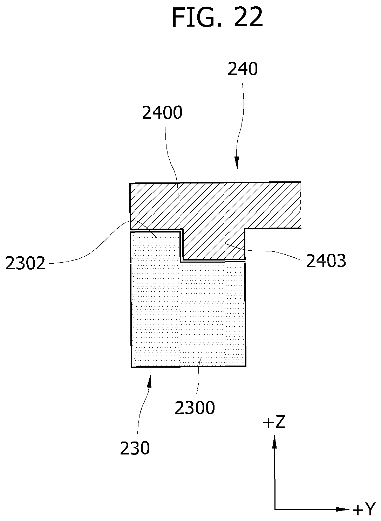

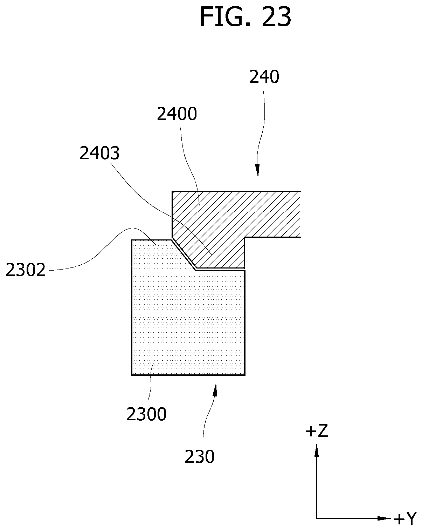

FIG. 20 is a cross-sectional view of an embodiment of a coupling structure of the first insulating part and the second insulating part according to an embodiment of the present invention; FIG. 21 is a cross-sectional view of a coupling structure of the first insulating part and the second insulating part according to another embodiment of the present invention; FIG. 22 is a cross-sectional view of a coupling structure of the first insulating part and the second insulating part according to another embodiment of the present invention; and FIG. 23 is a cross-sectional view of a coupling structure of the first insulating part and the second insulating part according to another embodiment of the present invention.

Referring to FIG. 20, the first insulating fixing portion 2302 protruding upward (for example, in the +Z-axis direction) from the first insulating body 2300 may be inserted into the second insulating body 2400.

The second insulating fixing portion 2403 protruding downward (for example, in the -Z-axis direction) from the second insulating body 2400 may be in contact with a side portion (for example, in the Y-axis direction) of the first insulating fixing portion 2302. One or more second insulating fixing portions 2403 may be provided. According to an embodiment, two second insulating fixing portions 2403 may be provided. The first insulating fixing portion 2302 may be disposed between the two second insulating fixing portions 2403.

The first insulating fixing portion 2302 is disposed to be inserted between the two second insulating fixing portions 2403 in this way, and the coupling strength of the first insulating part 230 and the second insulating part 240 can be improved. Further, the first insulating fixing portion 2302 is disposed close to an upper portion (for example, in the +Z-axis direction) of the second insulating body 2400, and a laser absorption rate of the first insulating fixing portion 2302 can be increased. Advantageously this makes it possible to reduce an output of the laser L during laser welding and/or to reduce an operating time of the laser L.

Referring to FIG. 21, an inclined surface may be formed on the first insulating fixing portion 2302. Since the inclined surface is formed on the first insulating fixing portion 2302, an incidence angle of the laser L can be set relatively freely. As an advantage, this makes it possible to improve a degree of freedom in design and to reduce time or cost required for laser welding.

Referring to FIG. 22, the first insulating fixing portion 2302 may be disposed on a side (in the -Y-axis direction in FIG. 22), and the second insulating fixing portion 2403 may be disposed on another side (in the +Y-axis direction in FIG. 22). The first insulating fixing portion 2302 is disposed on the side and the second insulating fixing portion 2403 is disposed on the another side, and an irradiation angle of the laser L can be freely set.

However, positions of the first insulating fixing portion 2302 and the second insulating fixing portion 2403 may be reversed. For example, the first insulating fixing portion 2302 may be disposed on the another side (in the +Y-axis direction in FIG. 22), and the second insulating fixing portion 2403 may be disposed on the side (in the -Y-axis direction in FIG. 22). In an embodiment, the first insulating fixing portion 2302 is disposed on the another side and the second insulating fixing portion 2403 is disposed on the side, it is possible to minimize or reduce transfer of heat generated during welding using the laser L to the terminal part 220. Advantageously, this makes it possible to minimize or reduce deformation or damage to the terminal part 220.

Referring to FIG. 23, the first insulating fixing portion 2302 may be disposed on a side (in the -Y-axis direction in FIG. 23). An inclined surface may be formed in the first insulating fixing portion 2302. A portion of the first insulating fixing portion 2302 may not be covered by the second insulating body 2400. Thus, if the first insulating fixing portion 2302 is irradiated with the laser L in a state in which a portion of the first insulating fixing portion 2302 is not covered by the second insulating body 2400, the laser L may not be transmitted through the second insulating body 2400. Accordingly, the first insulating part 230 and the second insulating part 240 may be welded using the laser L with a lower output. In an embodiment, a time required for laser welding can advantageously be reduced.

FIGS. 24 to 26 are perspective views illustrating a process of coupling the terminal part to the first insulating part according to an embodiment of the present invention.

A process of coupling the terminal part 220 to the first insulating part 230 will be described with reference to FIGS. 24 to 26. The description may be applied to the cap plate 210 and the second insulating part 240.

A waterproof bonding treatment may be performed on a surface of the terminal part 220 that is coupled to the first insulating part 230. If the waterproof bonding treatment is performed on the terminal part 220, a terminal anchor groove 2200 formed as a concave groove on the surface of the terminal part 220 may be formed.

The first insulating part 230 may be injection-molded on the terminal part 220 on which the waterproof bonding treatment has been performed. If the first insulating part 230 is injection-molded, a portion of the first insulating part 230 may be inserted into the terminal anchor groove 2200. The first insulating part 230 may include a linker 2306 that is inserted into the terminal anchor groove 2200.

Through the waterproof bonding treatment, the coupling strength between the terminal part 220 formed of a metal and the first insulating part 230 formed of a non-metal can be improved, and waterproof performance can be improved.

In an embodiment, the waterproof bonding treatment may also be performed on the cap plate 210, and the terminal anchor groove 2200 may be formed on the surface of the cap plate 210. A portion of the second insulating part 240 may be inserted into the terminal anchor groove 2200 formed in the cap plate 210. The second insulating part 240 may include a linker 2306 inserted into the terminal anchor groove 2200.

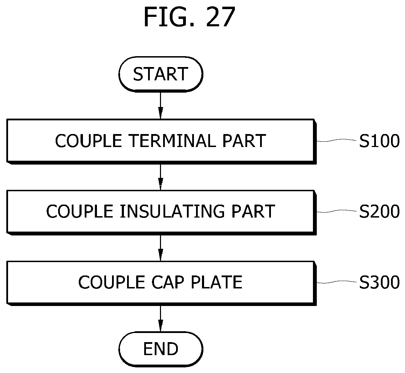

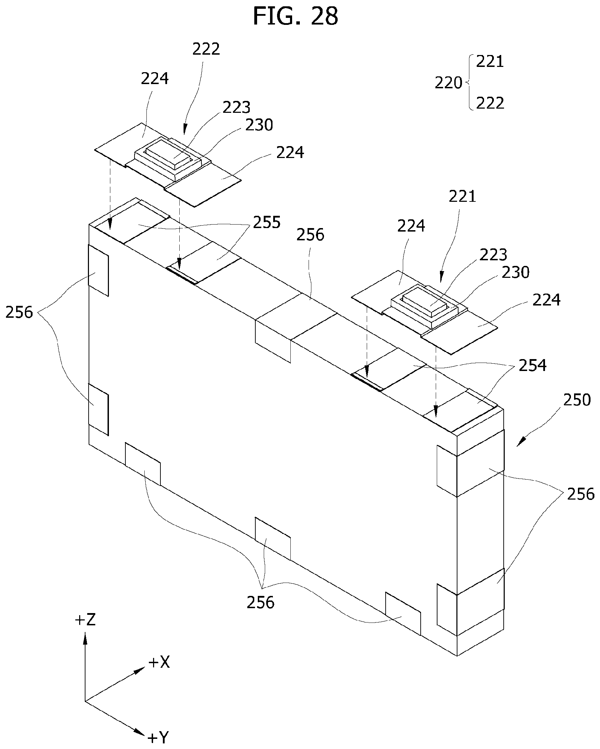

FIG. 27 is a flowchart of a manufacturing method for a secondary battery according to an embodiment of the present invention; and FIGS. 28 to 30 are perspective views illustrating a secondary battery manufacturing process according to an embodiment of the present invention.

A method of manufacturing a secondary battery will be described with reference to FIGS. 27 to 30.

The method of manufacturing a secondary battery may include a terminal part coupling operation S100 (see FIG. 27) for coupling the first insulating part 230 to the outer side of the terminal part 220, an insulating part coupling operation S200 (see FIG. 27) for coupling the second insulating part 240 coupled to the cap plate 210 to the first insulating part 230, and a cap plate coupling operation S300 (see FIG. 27) for coupling the case 200 to the cap plate 210.

In the terminal part coupling operation S100, the terminal part 220 on which the waterproof bonding treatment has been performed and the first insulating part 230 may be coupled. In an embodiment, the first insulating part 230 may be injection molded and coupled to the terminal part 220. The terminal part 220 may be coupled to the electrode assembly 250 (see FIG. 28). According to an embodiment, the first terminal 221 of the terminal part 220 may be connected to the first electrode 251 of the electrode assembly 250, and the second terminal 222 may be connected to the second electrode 252 of the electrode assembly 250. In an embodiment, the terminal current collection part 224 of the first terminal 221 may be connected to the plurality of first electrodes 251, and the terminal current collection part 224 of the second terminal 222 may be connected to the plurality of second electrodes 252. In an embodiment, the terminal part 220 and the electrode assembly 250 may be connected by welding.

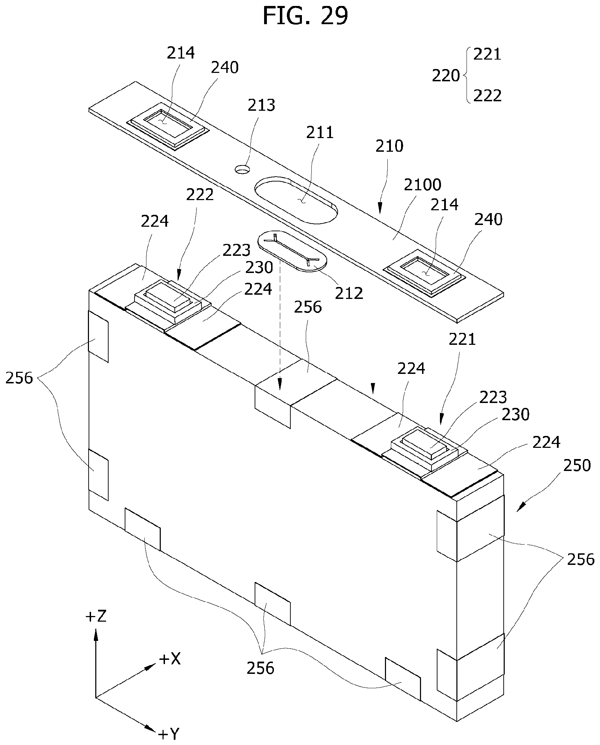

In the insulating part coupling operation S200, the terminal part 220 may be inserted into the cap plate terminal hole 214. The first insulating part 230, and the second insulating part 240 disposed on the cap plate 210 may be coupled (see FIG. 29). According to an embodiment, the first insulating part 230 may be irradiated with the laser L such that the first insulating part 230 and the second insulating part 240 can be welded. In an embodiment, the laser L may be transmitted through the second insulating part 240 and be absorbed by the first insulating part 230. Heat is generated in the first insulating part 230 that absorbs the laser L such that the first insulating part 230 and the second insulating part 240 can be welded.

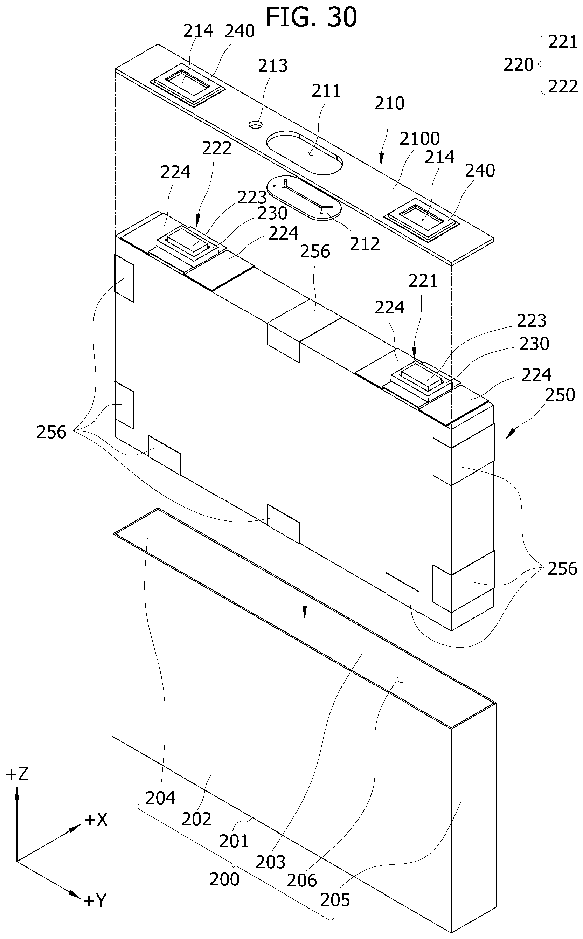

In the cap plate coupling operation S300, the cap plate 210 and the case 200 may be coupled (see FIG. 30). In an embodiment, the cap plate 210 and the case 200 can be coupled by welding.

According to one or more embodiments of the present invention, welding strength of the terminal part and the cap plate may be improved.

Additionally, according to one or more embodiments of the present invention, structural stability of the terminal part and the cap plate may be improved.

Additionally, according to one or more embodiments of the present invention, waterproof performance of the terminal part and the cap plate may be improved.

However, aspects and effects obtainable through the present disclosure are not limited to the above aspects and effects, and other aspects and technical effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A secondary battery (2) comprising:
a case (200) including an opening portion (206);
an electrode assembly (250) accommodated in the case (200) and comprising a first tab member (254) and a second tab member (255);
a cap plate (210) comprising a cap plate body (2100) located in the opening portion (206), and a cap plate terminal hole (214) passing through the cap plate body (2100);
a terminal part (220) comprising a first terminal (221) electrically connected to the first tab member (254), and a second terminal (222) electrically connected to the second tab member (255), and passing through the cap plate terminal hole (214);
a first insulating part (230) in contact with the terminal part (220) to support the terminal part (220); and
a second insulating part (240) on the cap plate (210) to support the first insulating part (230).

2. The secondary battery (2) as claimed in claim 1, wherein
the first insulating part (230) is between the terminal part (220) and the second insulating part (240), and
the second insulating part (240) is between the first insulating part (230) and the cap plate (210).

3. The secondary battery (2) as claimed in claim 1 or 2, wherein the first insulating part (230) and the second insulating part (240) are welded to each other.

4. The secondary battery (2) as claimed in claim 3, wherein the first insulating part (230) and the second insulating part (240) are laser welded to each other.

5. The secondary battery (2) as claimed in claim **4,** wherein the second insulating part (240) is configured to transmit a laser (L), and the first insulating part (230) is configured to absorb the laser (L) to be welded to the second insulating part (240).

6. The secondary battery (2) as claimed in claims 3 to 5, wherein
the first insulating part (230) is inserted in the terminal part (220), and
the second insulating part (240) is inserted in the cap plate body (2100).

7. The secondary battery (2) as claimed in claims 3 to 6, wherein the second insulating part (240) passes through the cap plate terminal hole (214) to be in contact with a cap plate body outer surface (2101), a cap plate body terminal surface (2103), and a cap plate body inner surface (2102).

8. The secondary battery (2) as claimed in claim 7, wherein the second insulating part (240) is inserted in the cap plate body inner surface (2102).

9. The secondary battery (2) as claimed in claims 3 to 8, wherein the first insulating part (230) passes through the terminal part (220).

10. The secondary battery (2) as claimed in claim 9, wherein the first insulating part (230) passes through a side portion of the terminal part (220).

11. The secondary battery (2) as claimed in claim 9 or 10, wherein the first insulating part (230) passes through a lower portion of the terminal part (220).

12. The secondary battery (2) as claimed in claim 11, wherein the first insulating part (230) is in contact with the lower portion of the terminal part (220) to support the lower portion of the terminal part (220).

13. The secondary battery (2) as claimed in claims 3 to 12, wherein the first insulating part (230) is waterproof-bonded to a surface of the terminal part (220).

14. A method of manufacturing a secondary battery (2), the method comprising:
coupling a first insulating part (230) to an outer side of a terminal part (220);
coupling the first insulating part (230) to a second insulating part (240) coupled to a cap plate (210); and
coupling a case (200) to the cap plate (210).

15. A battery module (M) comprising:
a housing (1);
a plurality of secondary batteries accommodated in the housing (1); and
a plurality of bus bars (3), each electrically connecting a pair of adjacent secondary batteries, wherein
each of the plurality of secondary batteries comprises:
a case (200) comprising an opening portion (206);
an electrode assembly (250) accommodated in the case (200) and comprising a first tab member (254) and a second tab member (255);
a cap plate (210) comprising a cap plate body (2100) located in the opening portion (206), and a cap plate terminal hole (214) passing through the cap plate body (2100);
a terminal part (220) comprising a first terminal (221) electrically connected to the first tab member (254) and a second terminal (222) electrically connected to the second tab member (255), the terminal part (220) passing through the cap plate terminal hole (214);
a first insulating part (230) in contact with the terminal part (220) to support the terminal part (220); and
a second insulating part (240) on the cap plate (210) to support the first insulating part (230).
